# FASCICULE DE BREVET EUROPEEN

(11) **EP 0 425 380 B1**
(45) Date de publication et mention de la délivrance du brevet: **21.06.1995**
(21) Numéro de dépôt: 90403005.3
(22) Date de dépôt: 25.10.1990
(51) Int. Cl.: C08L 95/00

(54) **Emulsion de liant bitumineux à viscosité contrôlée par addition de scléroglucane**
Emulsion bituminösen Bindemittels eine Viskosität aufweisend, die vom Skleroglukanzusatz kontrolliert wird
Emulsion of bituminous binder having a viscosity controlled by addition of scleroglucan

(30) Priorité: 26.10.1989 FR 8914052
(43) Date de publication de la demande: 02.05.1991
(73) Titulaire: ELF ANTAR FRANCE, 92400 Courbevoie (FR)
(72) Inventeur: Chaverot, Pierre, F-69600 Oullins (FR); Demangeon, Francis, F-69570 Dardilly (FR); Huet, Yves, F-50500 Carentan (FR)
(74) Mandataire: Boillot, Marc

(56) Documents cités:
- EP-A- 0 146 981
- EP-A- 0 173 490
- WO-A-86/04916
- BE-A- 403 494
- US-A- 3 447 940
- Wistler R.L. et al., "Industrial Gums", 2nd Ed., Academic Press, New York 1973, pp. 216-218,223-226,490/1,502-507.

## Description

L'invention concerne une émulsion de liant bitumineux à viscosité controlée par addition de scléroglucane.

L'utilisation d'émulsions de liants bitumineux dans la construction et la réparation de routes, pour le revêtement de chaussées, la stabilisation du sol, la réalisation d'étanchéité en génie civil ou en bâtiments ou pour des applications analogues est bien connue. Les émulsions convenant pour ces applications sont généralement du type "huile dans l'eau" et consistent en une dispersion d'une phase organique formée de fins globules du liant bitumineux dans une phase aqueuse continue, ladite phase aqueuse renfermant un système émulsifiant, qui favorise la dispersion des globules du liant bitumineux dans la phase aqueuse et consiste en un ou plusieurs agents émulsifiants, et éventuellement un agent régulateur du pH, qui peut être, selon le cas, un acide, un sel hydrosoluble ou une base. De telles émulsions sont habituellement classées selon la nature du système émulsifiant utilisé pour assurer la dispersion du liant bitumineux dans la phase aqueuse et selon que ledit système émulsifiant est constitué d'un ou plusieurs agents émulsifiants anioniques, cationiques, non ioniques ou amphotères, les émulsions correspondantes seront dites respectivement anioniques, cationiques, non ioniques ou amphotères.

L'émulsion d'un liant bitumineux est considérée comme un moyen permettant d'abaisser la viscosité dudit liant lors des opérations de mise en oeuvre de ce liant. Après rupture, l'émulsion restitue le liant bitumineux additionné du système émulsifiant et des autres additifs présents dans la phase aqueuse. L'émulsion de liant bitumineux se comporte comme un liquide à température ambiante et dans la réalisation d'enduits superficiels il est courant d'incorporer à la phase aqueuse de l'émulsion un agent épaississant, dont le rôle est d'augmenter la viscosite de l'émulsion à répandre sur le support à traiter de manière à maintenir en place l'émulsion sur le support et ainsi à assurer, avant gravillonnage, une répartition régulière de cette émulsion sur ledit support quelle que soit la pente du support. Ainsi la citation FR-A-2577545 et la citation FR-A-2577546, qui correspond à la citation WO-A-8604916, décrivent des émulsions cationiques de liants bitumineux, dans lesquelles peut être incorporé un agent épaississant consistant, par exemple, en une gomme naturelle hydrosoluble telle que gomme guar, gomme arabique, gomme ghatti, gomme karaya, gomme tragacanth, gomme locustbean, gomme xanthane, ou encore en un polyuréthanne hydrosoluble de faible masse moléculaire et notamment un polyuréthanne de masse moléculaire viscosimétrique inférieure à 20 000, qui résulte de la réaction d'un ou plusieurs polyisocyanates avec un ou plusieurs polyols choisis parmi les polyesterpolyols et les polyétherpolyols.

L'utilisation d'agents épaississants conventionnels tels que ceux précités pour contrôler la viscosité des émulsions de liants bitumineux peut conduire, en particulier lorsque le liant bitumineux est un liant bitume/polymère, à une rupture de l'émulsion qui s'opère en deux stades, à savoir un premier stade de rupture rapide d'une partie de l'émulsion suivi d'un deuxième stade de rupture ralentie de la partie de l'émulsion non rompue dans le premier stade, avec comme résultat, outre une durée totale de rupture importante, l'obtention d'un liant bitumineux rompu peu cohésif et par conséquent peu élastique.

On a maintenant trouvé qu'en utilisant du scléroglucane pour constituer au moins une partie de l'agent épaississant utilisé pour contrôler la viscosité d'une émulsion aqueuse d'un liant bitumineux et notamment d'un liant bitumineux du type bitume/polymère, on pouvait remédier aux inconvénients résultant de l'emploi des agents épaississants usuels, ladite utilisation de scléroglucane conduisant à une rupture franche de l'émulsion dans un temps relativement court et avec obtention d'un liant bitumineux rompu cohésif dont les propriétés élastiques correspondent substantiellement à celles du liant bitumineux avant sa mise en émulsion.

Il est connu de la citation EP-A-0146981 que l'on peut utiliser des solutions visqueuses de scléroglucane pour constituer divers fluides pour le traitement des puits producteurs d'hydrocarbures et des conduites servant au transport de la production pétrolière, notamment fluides de fracturation de formations souterraines, fluides de suspension de particules solides ou de bulles de gaz, gélifiants acides, fluides de complétion, agents de nettoyage des conduites. Il est également connu de la citation US-A-3447940 que le scléroglucane peut être utilisé comme agent épaississant dans des compositions aqueuses de peintures renfermant des pigments et une composante filmogène à base d'une matière polymère.

L'invention a pour objet une émulsion de liant bitumineux, qui est formée d'une dispersion d'une phase organique consistant en ledit liant bitumineux dans une phase aqueuse renfermant un système émulsifiant, qui est constitué d'un ou plusieurs agents émulsifiants, un agent épaississant hydrosoluble et éventuellement un agent régulateur du pH de l'émulsion, ladite émulsion se caractérisant en ce que l'agent épaississant est constitué, en poids, de 40 % à 100 % d'un scléroglucane et de 60 % à 0 % d'un ou plusieurs agents épaississants hydrosolubles choisis parmi les gommes naturelles guar, caroube, alginate et pectine.

Les scléroglucanes, qui entrent dans la composition des émulsions selon l'invention, sont des polysaccharides hydrosolubles dont les molécules sont constituées d'une chaîne linéaire principale formée de motifs D-glucose liés par des liaisons β 1,3 et dont un sur trois est lié à un motif D-glucose latéral par une liaison β 1,6. Ces polysaccharides sont obtenus par fermentation d'un milieu à base de sucre et de sels minéraux sous l'action d'un microorganisme de type Sclerotium. Une description plus complète des scléroglucanes et de leur préparation peut être trouvée dans la citation US-A-3301848, dont le contenu est incorporé par référence à la présente description.

Comme source de scléroglucane on peut faire appel selon l'invention à un scléroglucane technique, c'est-à-dire à un scléroglucane isolé du milieu de fermentation avec sa biomasse, ou à un scléroglucane purifié de sa biomasse, lesdits produits se présentant sous la forme d'une poudre ou bien d'une solution plus ou moins concentrée dans un solvant aqueux et/ou hydroalcoolique, ou encore employer le milieu réactionnel liquide issu de la fermentation et renfermant le scléroglucane en solution, après séparation éventuelle des matières solides qu'il contient par filtration ou centrifugation et éventuellement concentration dudit milieu réactionnel. On peut encore utiliser des scléroglucanes modifiés obtenus par remplacement des groupements hydroxyles des motifs D-glucose par des groupements fonctionnels tels que -OR, -OOCR, -OCH₂COOH, -OSO₃H, -ONO₂, -OCS₂H, -OOCNHC₆H₅ avec R désignant un radical alcoyle en C₁ à C₆, par exemple méthyle, éthyle, propyle, butyle, ou un radical phényle. La préparation de tels scléroglucanes modifiés est donnée dans la citation US-A-3301848. Conviennent encore selon l'invention les scléroglucanes modifiés résultant du traitement de scléroglucane non modifié ou de l'agent épaississant, consistant en partie en scléroglucane non modifié, par un réactif dialdéhyde tel que le glyoxal, ledit traitement étant réalisé, par exemple, par mise en contact du scléroglucane ou de l'agent épaississant en contenant, en solution, en suspension ou sensiblement à sec, avec 0,5 % à 10 % en poids du réactif par rapport au scléroglucane ou à l'agent épaississant.

La quantité d'agent épaississant présent dans la phase aqueuse de l'émulsion est avantageusement choisie pour que ladite phase aqueuse renferme, en poids, 100 à 5000 ppm et de préférence 200 à 2000 ppm de scléroglucane.

Le liant bitumineux constituant la phase organique de l'émulsion peut consister en un bitume ou en une composition du type bitume/polymère, ladite composition pouvant être l'un quelconque des produits obtenus à partir de bitumes additionnés d'un ou plusieurs polymères, et éventuellement modifiés par réaction avec ce ou ces polymères, éventuellement en présence d'un agent de couplage choisi, par exemple, parmi le soufre, les polysulfures, les accélérateurs de vulcanisation et les mélanges de tels produits, les bitumes entrant dans la préparation desdites compositions pouvant être également additionnés, si besoin est, d'un agent de fluxage tel qu'une coupe pétrolière, une huile de houille, une huile végétale ou un mélange de tels agents de fluxage. Dans ces compositions, la quantité de polymère représente géneralement 0,5 à 15 % et de préférence 0,7 à 10 % du poids du bitume. Le bitume utilisé seul ou en association avec un polymère dans une composition du type bitume/polymère peut être choisi parmi les divers bitumes ayant une pénétration, définie suivant la norme NF T 66004, comprise entre 5 et 500 et de préférence entre 20 et 400. De tels bitumes peuvent être, en particulier, des bitumes de distillation directe ou de distillation sous pression réduite, ou encore des bitumes soufflés ou semi-soufflés, lesdits bitumes ayant une pénétration comprise dans les intervalles précités. Les polymères susceptibles d'être présents dans la composition bitume/polymère ou liant bitume/polymère peuvent être choisis parmi les divers polymères que l'on associe aux bitumes dans les compositions bitume/polymère. Lesdits polymères peuvent être, par exemple, des élastomères tels que polyisoprène, caoutchouc butyle, polybutène, polyisobutène, polyacrylates, polyméthacrylates, polynorbornène, copolymères éthylène/propène, terpolymères éthylène/propène/diène (terpolymères EPDM), ou encore des polymères fluorés tels que polytétrafluoroéthylène, des polymères siliconés tels que polysiloxanes, des copolymères d'oléfines et de monomères vinyliques tels que copolymères éthylène/acétate de vinyle, copolymères éthylène/ester acrylique, copolymères éthylène/chlorure de vinyle, des polymères du type alcool polyvinylique, polyamide, polyester ou encore polyuréthanne.

Avantageusement, le polymère présent dans la composition bitume/polymère pouvant constituer un liant bitumineux utilisable selon l'invention est choisi parmi les copolymères statistiques ou séquencés de styrène et d'un diène conjugué car ces copolymères se dissolvent très facilement dans les bitumes et confèrent à ces derniers d'excellentes propriétés mécaniques et dynamiques et notamment de très bonnes propriétés de viscoélasticité. En particulier le copolymère de styrène et d'un diène conjugué est choisi parmi les copolymères séquencés de styrène et de butadiène, de styrène et d'isoprène, de styrène et de chloroprène, de styrène et de butadiène carboxylé ou de styrène et d'isoprène carboxylé. Le copolymère de styrène et de diène conjugué, et en particulier chacun des copolymères séquencés précités, possède avantageusement une teneur pondérale en styrène allant de 15 % à 40 %. La masse moléculaire viscosimétrique moyenne du copolymère de styrène et de diène conjugué, et notamment celle des copolymères séquencés mentionnés ci-dessus peut être comprise, par exemple, entre 30 000 et 300 000 et se situe de préférence entre 70 000 et 200 000.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé, qui ont des teneurs en styrène et des masses moléculaires situées dans les intervalles définis précédemment.

Le liant bitumineux peut encore renfermer des additifs divers et notamment des composés azotés tels que des amines ou amides comme promoteurs d'adhésion du liant bitumineux aux surfaces minérales.

La quantité de la phase organique formée du liant bitumineux représente avantageusement 30 à 90 % et de préférence 50 à 85 % du poids de l'émulsion.

Le système émulsifiant présent dans la phase aqueuse de l'émulsion peut être de nature cationique, anionique, non ionique ou même amphotère. Un système émulsifiant de nature cationique, qui donne naissance à une émulsion cationique, comporte un ou plusieurs agents émulsifiants cationiques que l'on peut choisir avantageusement parmi les agents émulsifiants cationiques azotés tels que monoamines grasses, polyamines, amidoamines, amidopolyamines, sels ou oxydes desdites amines et amidoamines, produits de réaction des composés précités avec l'oxyde d'éthylène et/ou l'oxyde de propylène, imidazolines et sels d'ammonium quaternaires. En particulier le système émulsifiant de nature cationique peut être formé par l'association d'un ou plusieurs agents émulsifiants cationiques A choisis parmi les agents émulsifiants azotés cationiques du type des monoamines, des diamines, des amidoamines, des oxydes de telles amines ou amidoamines, des produits de réaction de tels composés avec l'oxyde d'éthylène et/ou l'oxyde de propylène et des sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine, le rapport de la quantité pondérale du ou des composés A à la quantité pondérale totale des composés A et B allant en particulier de 5 % à 95 %. Un système émulsifiant de nature anionique, qui donne naissance à une émulsion anionique, comporte un ou plusieurs agents émulsifiants anioniques que l'on peut choisir notamment parmi les sels de métal alcalin ou d'ammonium d'acides gras, les polyalcoxycarboxylates de métal alcalin, les N-acylsarcosinates de métal alcalin, les hydrocarbylsulfonates de métal alcalin et notamment les alcoylsulfonates de sodium, les arylsulfonates de sodium et les alcoylarylsulfonates de sodium, les alcoylarènesulfonates de sodium, les lignosulfonates de sodium, les dialcoylsulfosuccinates de sodium et les alcoylsulfates de sodium. On peut également utiliser un système émulsifiant de nature non ionique formé d'un ou plusieurs agents émulsifiants non ioniques que l'on peut notamment choisir parmi les alcools gras éthoxylés, les acides gras éthoxylés, les esters de sorbitan, les esters de sorbitan éthoxylés, les alcoylphénols éthoxylés, les amides gras éthoxylés et les esters d'acides gras de la glycérine. On peut encore utiliser un système émulsifiant de nature amphotère formé d'un ou plusieurs agents émulsifiants amphotères que l'on peut choisir, par exemple, parmi les bétaines et les dérivés imidazolinium amphotères. Il est également possible d'utiliser un système émulsifiant consistant en un mélange d'agents émulsifiants de natures différentes, par exemple un mélange d'un ou plusieurs agents émulsifiants anioniques ou cationiques avec un ou plusieurs agents émulsifiants non ioniques ou/et amphotères. Pour plus de détails sur les agents émulsifiants susceptibles de constituer des systèmes émulsifiants utilisables selon l'invention, on peut se référer au manuel de KIRK-OTHMER intitulé ENCYCLOPEDIA OF CHEMICAL TECHNOLOGY, Third Edition, Volume 22, pages 347 à 360 (émulsifiants anioniques), pages 360 à 377 (émulsifiants non ioniques), pages 377 à 384 (émulsifiants cationiques) et pages 384 à 387 (émulsifiants amphotères).

La quantité de système émulsifiant présente dans l'émulsion peut varier assez largement. Cette quantité peut représenter avantageusement de 0,03 % à 3 % et de préférence de 0,06 % à 2 % du poids total de l'émulsion.

L'agent que l'on utilise éventuellement pour ajuster le pH de l'émulsion à la valeur désirée peut être un acide, par exemple un acide minéral tel que HCl, HNO₃, H₃PO₄ ou un acide mono- ou polycarboxylique saturé ou insaturé tel que l'acide acétique, l'acide formique, l'acide oxalique ou l'acide citrique, lorsque la valeur du pH de l'émulsion doit être abaissée, ou bien une base ou un sel basique, notamment une base minérale consistant en un hydroxyde de métal alcalin comme la soude ou en un oxyde ou hydroxyde alcalinoterreux, lorsque la valeur du pH de l'émulsion doit être augmentée.

Les émulsions selon l'invention sont préparées en réalisant, dans une zone de formation d'émulsion et notamment dans un appareil du type moulin à colloides, une dispersion intime du liant bitumineux dans une phase aqueuse renfermant le système émulsifiant et l'agent épaississant à base de scléroglucane, en quantités appropriées pour obtenir les concentrations définies plus haut, et éventuellement l'agent régulateur du pH. Pour ce faire, on amène simultanément et séparément à la zone de formation de l'émulsion, d'une part, le liant bitumineux, sous la forme d'une masse fondue dont la température est comprise entre 80°C et 180°C et de préférence entre 120°C et 160°C, et, d'autre part, la phase aqueuse renfermant les ingrédients précités et possédant une température comprise entre 15°C et 80°C et de préférence entre 20°C et 60°C, et l'on maintient l'ensemble dans ladite zone pendant un temps suffisant pour former l'émulsion.

La phase aqueuse, que l'on mélange avec le liant bitumineux dans la zone de formation de l'émulsion, est préparée en introduisant l'agent épaississant, le système émulsifiant et, s'il est utilisé, l'agent régulateur du pH dans la quantité d'eau nécessaire à la fabrication de l'émulsion et préalablement portée à une température comprise entre 30°C et 75°C. Les quantités respectives d'agent épaississant et de système émulsifiant ajoutées à l'eau sont choisies pour que les concentrations de ces ingrédients dans l'émulsion résultante soient situées dans les intervalles définis précédemment. La quantité de l'agent régulateur de pH, s'il est utilisé, est ajustée pour amener le pH de l'émulsion à la valeur choisie. Les ingrédients, à savoir agent épaississant à base de scléroglucane, système émulsifiant et, le cas échéant, agent régulateur de pH ajoutés à l'eau peuvent l'être dans un ordre quelconque. Toutefois, il est préférable de dissoudre d'abord l'agent épaississant à base de scléroglucane dans l'eau destinée à former la phase aqueuse de l'émulsion, puis d'incorporer ensuite le système émulsifiant à la solution obtenue et enfin d'ajuster le pH du mélange ainsi réalisé, si besoin est, par addition, selon le cas, d'un acide ou d'une base. Lorsque la source d'agent épaississant consiste en un scléroglucane modifié par un dialdéhyde du type glyoxal ou renferme un tel scléroglucane modifié, on peut accélérer le passage en solution dudit scléroglucane modifié en amenant le pH du milieu utilisé pour sa dissolution à une valeur supérieure à 7 par addition d'une base ou d'un agent émulsifiant basique.

Dans la préparation de l'émulsion, la phase aqueuse renfermant l'agent épaississant à base de scléroglucane, le système émulsifiant et l'éventuel régulateur de pH, d'une part, et le liant bitumineux, d'autre part, sont amenés à la zone de formation d'émulsion en proportions telles que l'émulsion résultante renferme avantageusement en poids, comme indiqué précédemment, 30 à 90 % et de préférence 50 à 85 % de phase organique constituée du liant bitumineux.

Les émulsions selon l'invention conviennent tout particulièrement pour des applications de technique routière, d'étanchéité en génie civil ou en bâtiment ou encore pour des utilisations industrielles.

L'invention est illustrée par les exemples suivants donnés à titre non limitatif.

Dans ces exemples, les quantités et pourcentages sont exprimés en poids sauf indication contraire.

### EXEMPLE 1 :

On préparait trois émulsions anioniques d'un liant bitumineux consistant en un bitume présentant une pénétration d'environ 140/160 et une viscosité dynamique égale à 100 Pa·s, la première émulsion (émulsion 1.A) renfermant un agent épaississant consistant en scléroglucane modifié par le glyoxal, la seconde (émulsion 1.B) renfermant un agent épaississant témoin consistant en une gomme xanthane et la troisième (émulsion 1.C) étant exempte d'agent épaississant.

L'agent épaississant selon l'invention utilisé dans la préparation de l'émulsion 1.A était obtenu en traitant sous agitation, dans un mélangeur, pendant environ 10 minutes, 200 parties de poudre de scléroglucane ACTIGUM CS11, commercialisé par SANOFI BIOINDUSTRIES (France), par une solution résultant du mélange de 1,6 parties de citrate monosodique, 8 parties d'eau, 0,8 partie d'une solution aqueuse de glyoxal à 30 % et 16 parties d'alcool isopropylique, puis en séchant le produit traité à 60°C pendant deux heures.

La mise en émulsion du liant bitumineux était réalisée comme suit.

On formait tout d'abord la phase aqueuse des émulsions en dissolvant, dans une quantité appropriée d'eau, l'agent épaississant puis l'agent émulsifiant pour la phase aqueuse des émulsions 1.A et 1.B ou l'agent émulsifiant seul pour la phase aqueuse de l'émulsion 1.C, et l'on amenait le pH de chaque phase aqueuse à une valeur égale à 10 par addition de soude. l'agent émulsifiant employé dans chaque cas consistait en le sel de sodium d'un mélange d'acides gras en C₁₄ et C₁₈ et était utilisé en quantité représentant 2,5 % de la phase aqueuse. Dans la phase aqueuse préparée pour former l'émulsion 1.A, l'agent épaississant consistait en scléroglucane modifié par le glyoxal et était utilisé en quantité représentant 0,05 % de la phase aqueuse. Dans la phase aqueuse préparée pour former l'émulsion 1.B, l'agent épaississant consistait en une gomme xanthane et était utilisé en quantité représentant 0,04 % de la phase aqueuse. La phase aqueuse préparée pour former l'émulsion 1.C ne renfermait pas d'agent épaississant.

On produisait l'émulsion dans un émulseur du type moulin à colloides, dans lequel on introduisait, simultanément et séparément, 400 parties de la phase aqueuse préparée comme indiqué ci-dessus et portée à 45°C ainsi que 600 parties du liant bitumineux porté à 145°C.

On obtenait 1000 parties d'émulsion anionique dont les caractéristiques sont données ci-dessous.

| | | | |
|---|---|---|---|
| . Emulsion | 1.A | 1.B | 1.C. |
| . pH | 10 | 10 | 10 |

| . Agent épaississant | | | |
|---|---|---|---|
| - Nature | Scléroglucane modifié glyoxal | Gomme xanthane | Aucun |
| - Quantité dans l'émulsion | 0,02 % | 0,016 % | |
| . Teneur en agent émulsifiant | 1 % | 1 % | 1 % |
| . Teneur en liant bitumineux | 60,9 % | 60,8 % | 59,8 % |
| . Viscosité selon la norme ASTM E 102 (secondes) | 24 | 20 | 14 |
| . Sédimentation après 6 jours | 1,2 % | 4,6 % | 18,6 % |

### EXEMPLE 2 :

On préparait deux émulsions cationiques d'un liant bitumineux consistant en un bitume, dit de qualité "émulsionnable", présentant une pénétration de valeur 180/220, la première émulsion renfermant un agent épaississant à base de scléroglucane (émulsion 2.A selon l'invention) et la seconde ne renfermant aucun agent épaississant (émulsion 2.B témoin).

L'agent épaississant employé dans la préparation de l'émulsion 2.A était un scléroglucane technique commercialisé par SANOFI BIOINDUSTRIES sous l'appellation ACTIGUM CS6 et consistant en un scléroglucane séparé, par précipitation, du milieu réactionnel issu du processus de fermentation donnant naissance au scléroglucane et non purifié, ledit scléroglucane technique renfermant 70 % de scléroglucane et 30 % de biomasse.

La mise en émulsion du liant bitumineux était réalisée comme indiqué ci-après.

On formait les phases aqueuses des émulsions en dissolvant, dans une quantité appropriée d'eau, tout d'abord le scléroglucane technique puis l'agent émulsifiant pour la phase aqueuse de l'émulsion 2.A ou l'agent émulsifiant seul pour la phase aqueuse de l'émulsion 2.B, après quoi on amenait le pH de chaque phase aqueuse à une valeur égale à 3 par addition d'acide chlorhydrique à 20°Bé(d=1,16). Les diverses opérations de formation des phases aqueuses des émulsions étaient réalisées à 60°C et en outre la dissolution du scléroglucane technique dans la phase aqueuse correspondant à l'émulsion 2.A était effectuée sous une agitation à très fort taux de cisaillement pendant 5 à 6 heures. La quantité de scléroglucane technique utilisée représentait 0,1 % de la phase aqueuse. l'agent émulsifiant employé dans chaque cas consistait en une propylène diamine de suif commercialisée sous le nom de DINORAM S par la société CECA et était utilisé en quantité représentant 0,5 % de la phase aqueuse.

On produisait l'émulsion dans un émulseur du type moulin à colloides, dans lequel on introduisait, simultanément et séparément, 300 parties de la phase aqueuse préparée comme indiqué ci-dessus à 60°C et 700 parties du liant bitumineux porté à 145°C.

On obtenait 1000 parties d'émulsion cationique dans chaque cas dont les caractéristiques de viscosité sont données ci-après :

| | | |
|---|---|---|
| . Emulsion | 2.A | 2.B |
| . Viscosité cinématique (m²/s) | 2.10⁻³ | 1,1.10⁻³ |
| . Pseudo-viscosité à 25°C avec un orifice de 4 mm de diamètre selon NF T 66005 (s) | 150 | 75 |

### EXEMPLE 3 :

On préparait trois émulsions cationiques d'un liant bitumineux consistant en un bitume modifié par un polymère (liant bitume/polymère), la première émulsion renfermant un agent épaississant à base de scléroglucane (émulsion 3.A selon l'invention), la seconde renfermant un agent épaississant témoin consistant en une gomme xanthane (émulsion 3.B) et la troisième ne renfermant aucun agent épaississant (émulsion 3.C).

L'agent épaississant employé dans la préparation de l'émulsion 3.A était un scléroglucane modifié par le glyoxal, ledit scléroglucane modifié étant obtenu en traitant un scléroglucane technique similaire à celui de l'exemple 2 par le glyoxal dans les conditions décrites dans l'exemple 1.

Le liant bitume/polymère utilisé dans la préparation des trois émulsions consistait en le produit de réaction à température élevée d'un bitume routier de pénétration 180/220 avec une solution mère constituée d'une solution de soufre et d'un copolymère séquencé styrène/butadiène à 25 % de styrène dans une coupe pétrolière obtenue en raffinerie après craquage catalytique des distillats lourds et dénommée "Light Cycle Oil", ladite coupe ayant un intervalle de distillation de l'ordre de 180°C à 360°C. Le mode opératoire de préparation du liant bitume/polymère était le suivant. Vingt parties du copolymère séquencé étaient dissoutes dans 80 parties de la coupe pétrolière à une température comprise entre 80°C et 100°C. Après complète dissolution du polymère, on ajoutait 0,6 partie de soufre à la solution. Quinze parties de la solution ainsi préparée étaient mélangées à 85 parties du bitume routier et le mélange était porté à une température comprise entre 170°C et 180°C pendant environ 1, 5 heure.

La mise en émulsion du liant bitumineux du type bitume/polymère était réalisée comme indiqué ci-après.

On formait la phase aqueuse de chaque émulsion en dissolvant, dans une quantité appropriée d'eau, tout d'abord l'agent épaississant puis le système émulsifiant pour la phase aqueuse de chacune des émulsions 3.A et 3.B ou le système émulsifiant seul pour la phase aqueuse de l'émulsion 3.C, après quoi on amenait le pH de chaque phase aqueuse à une valeur égale à 6 par addition d'acide chlorhydrique à 20°Bé. Les diverses opérations de formation des phases aqueuses étaient réalisées à 60°C, en outre la dissolution de l'agent épaississant dans la phase aqueuse correspondant à l'émulsion 3.A ou 3.B. était opérée sous agitation modérée, la quantité d'agent épaississant utilisée dans chaque cas représentant 0,08 % de la phase aqueuse. Le système émulsifiant employé dans chaque cas était un mélange de propylène diamine de suif (DINORAM S) et d'une polypropylène polyamine de suif commercialisée sous le nom de LILAMULS EM 30, les quantités respectives de DINORAM S et de LILAMULS EM 30 représentant 0,045 % et 0,4 % de la phase aqueuse.

On produisait chaque émulsion dans un émulseur du type moulin à colloides, dans lequel on introduisait, simultanément et séparément, 300 parties de la phase aqueuse à 60°C et 700 parties du liant bitumineux bitume/polymère porté à 145°C.

On obtenait 1000 parties d'émulsion cationique dans chaque cas dont les caractéristiques de viscosité sont données ci-après.

| | | | |
|---|---|---|---|
| . Emulsion | 3.A | 3.B | 3.C |
| . Viscosité cinématique (m²/s) | 6x10⁻⁴ | 5,6x10⁻⁴ | 3,8x10⁻⁴ |
| . Pseudo-viscosité à 25°C avec un orifice de 4 mm de diamètre selon NF T 66005 (s) | 42 | 40 | 28 |

Pour chacune des émulsions 3.A à 3.C on a déterminé également l'indice de rupture aux fines siliceuses, évalué selon la norme NF T 66017 et représentant la quantité minimale, exprimée en grammes, de sable siliceux de granulométrie 40 à 150 »m entraînant la rupture de 100g d'émulsion avec formation d'un caillot sable/liant bitumineux.

Les résultats suivants ont été obtenus :

| | | | |
|---|---|---|---|
| . Emulsion | 3.A | 3.B | 3.C |
| . Indice de rupture (g) | 40-45 | >80*) | 40-45 |

| | | | |
|---|---|---|---|
| *) rupture en deux parties, pas de cohésion du caillot de fines siliceuses enrobées de liant. | | | |

### EXEMPLE 4

On préparait une émulsion cationique d'un liant bitumineux consistant en le liant bitume/polymère, dont la préparation est décrite dans l'exemple 3, ladite émulsion renfermant un agent épaississant consistant en le scléroglucane technique employé dans l'exemple 2.

La mise en émulsion du liant bitumineux était effectuée comme indiqué ci-après.

On formait la phase aqueuse de l'émulsion en dissolvant, dans une quantité d'eau appropriée, tout d'abord l'agent épaississant puis le système émulsifiant, après quoi on amenait le pH de la phase aqueuse à la valeur 6 par addition d'acide chlorhydrique à 20°Bé. Les diverses opérations de formation de la phase aqueuse étaient réalisées à 60°C et en outre la dissolution de l'agent épaississant dans la phase aqueuse était opérée sous une agitation à très fort taux de cisaillement pendant environ 5 heures, la quantité d'agent épaississant utilisée représentant 0,1 % de la phase aqueuse. Le système émulsifiant employé était un mélange de DINORAM S et de LILAMULS EM 30 en quantités représentant respectivement 0,045 % et 0,4 % de la phase aqueuse.

On produisait l'émulsion dans un moulin à colloides, dans lequel on introduisait, simultanément et séparément, 300 parties de la phase aqueuse à 60°C et 700 parties du liant bitumineux du type bitume/polymère porté à 145°C.

On obtenait 1000 parties d'émulsion cationique présentant une pseudo-viscosité, déterminée comme indiqué dans l'exemple 3, égale à 40 s et un indice de rupture aux fines siliceuses, évalué selon la norme NF T 66017, égal à environ 50 g.

## Revendications

1. Emulsion de liant bitumineux formée d'une dispersion d'une phase organique consistant en ledit liant bitumineux dans une phase aqueuse renfermant un système émulsifiant, qui est constitué d'un ou plusieurs agents émulsifiants, un agent épaississant hydrosoluble et éventuellement un agent régulateur du pH de l'émulsion, caractérisée en ce que l'agent épaississant est constitué, en poids, de 40 % à 100 % d'un scléroglucane et de 60 % à 0 % d'un ou plusieurs agents épaississants hydrosolubles choisis parmi les gommes naturelles guar, caroube, alginate et pectine.

2. Emulsion selon la revendication 1, caractérisée en ce que l'agent épaississant consiste uniquement en scléroglucane.

3. Emulsion selon la revendication 1 ou 2, caractérisée en ce que le scléroglucane utilisé est un scléroglucane isolé de son milieu de préparation et éventuellement purifié.

4. Emulsion selon la revendication 1 ou 2, caractérisée en ce que le scléroglucane utilisé consiste en le milieu réactionnel liquide issu de sa préparation et renfermant le scléroglucane en solution, après séparation éventuelle des matières solides contenues dans ledit milieu et éventuellement concentration de ce dernier.

5. Emulsion selon la revendication 1 ou 2, caractérisée en ce que le scléroglucane utilisé est un scléroglucane modifié obtenu par remplacement de groupements hydroxyles des motifs D-glucose du scléroglucane par des groupements fonctionnels choisis parmi les groupements -OR, -OOCR, -OCH₂COOH, -OSO₃H, -ONO₂, -OCS₂H, -OOCNHC₆H₅ avec R désignant un radical alkyle en C₁ à C₆.

6. Emulsion selon la revendication 1 ou 2, caractérisée en ce que le scléroglucane utilisé est un scléroglucane modifié par traitement avec un dialdéhyde.

7. Emulsion selon la revendication 6, caractérisée en ce que le dialdéhyde est le glyoxal.

8. Emulsion selon l'une des revendications 1 à 7, caractérisée en ce que la quantité d'agent épaississant présent dans la phase aqueuse de l'émulsion est choisie pour que ladite phase aqueuse renferme, en poids, 100 à 5000ppm de scléroglucane.

9. Emulsion selon l'une des revendications 1 à 8, caractérisée en ce que le liant bitumineux constituant la phase organique de l'émulsion consiste en un bitume.

10. Emulsion selon l'une des revendications 1 à 8, caractérisée en ce que le liant bitumineux constituant la phase organique de l'émulsion consiste en une composition du type bitume/polymère.

11. Emulsion selon l'une des revendications 1 à 8, caractérisée en ce que le liant bitumineux constituant la phase organique de l'émulsion consiste en une composition bitume/polymère pour laquelle le polymère est un copolymère de styrène et d'un diène conjugué.

12. Emulsion selon la revendication 11, caractérisée en ce que le copolymère de styrène et d'un diène conjugué est choisi parmi les copolymères séquencés styrène/butadiène styrène/isoprène, styrène/chloroprène, styrène/butadiène carboxylé et styrène/isoprène carboxylé.

13. Emulsion selon l'une des revendications 1 à 12, caractérisée en ce que la phase organique formée du liant bitumineux représente 30 à 90 % du poids de l'émulsion.

14. Emulsion selon l'une des revendications 1 à 13, caractérisée en ce que le système émulsifiant présent dans la phase aqueuse de l'émulsion est formé d'un ou de plusieurs agents émulsifiants cationiques.

15. Emulsion selon l'une des revendications 1 à 13, caractérisée en ce que le système émulsifiant présent dans la phase aqueuse de l'émulsion est formé d'un ou plusieurs agents émulsifiants anioniques.

16. Emulsion selon l'une des revendications 1 à 13, caractérisée en ce que le système émulsifiant présent dans la phase aqueuse de l'émulsion est formé d'un ou plusieurs agents émulsifiants non ioniques.

17. Emulsion selon l'une des revendications 1 à 13, caractérisée en ce que le système émulsifiant présent dans la phase aqueuse de l'émulsion consiste en un ou plusieurs agents émulsifiants amphotères.

18. Emulsion selon l'une des revendications 1 à 17, caractérisée en ce qu'elle renferme, en poids, 0,03 % à 3 % de système émulsifiant.

19. Utilisation de l'émulsion selon l'une des revendications 1 à 18, pour des applications de technique routière, d'étanchéité en génie civil ou en bâtiment ou encore pour d'autres applications industrielles.

## Claims

1. Bituminous binder emulsion formed from a dispersion of an organic phase comprising the said bituminous binder in an aqueous phase containing an emulsifying system, which is constituted by one or more emulsifying agents, a water-soluble thickening agent and optionally an agent regulating the pH of the emulsion, characterised in that the thickening agent is constituted by from 40 % to 100 % by weight of a scleroglucan and from 60 % to 0 % by weight of one or more water-soluble thickening agents selected from the natural gums guar, carob, alginate and pectin.

2. Emulsion according to Claim 1, characterized in that the thickening agent consists solely of scleroglucan.

3. Emulsion according to Claim 1 or 2, characterised in that the scleroglucan used is a scleroglucan isolated from its preparation medium and optionally purified.

4. Emulsion according to Claim 1 or 2, characterised in that the scleroglucan used comprises the liquid reaction medium resulting from its preparation and containing the scleroglucan in solution, after optional separation of the solid materials contained in the said medium and optional concentration of that medium.

5. Emulsion according to Claim 1 or 2, characterised in that the scleroglucan used is a modified scleroglucan obtained by replacing hydroxy groups of the D-glucose units of the scleroglucan by functional groups selected from the groups -OR, -OOCR, -OCH₂COOH, -OSO₃H, -ONO₂, -OCS₂H and -OOCNHC₆H₅ wherein R represents a C₁-C₆-alkyl radical.

6. Emulsion according to Claim 1 or 2, characterised in that the scleroglucan used is a scleroglucan modified by treatment with a dialdehyde.

7. Emulsion according to Claim 6, characterised in that the dialdehyde is glyoxal.

8. Emulsion according to any one of Claims 1 to 7, characterised in that the amount of thickening agent present in the aqueous phase of the emulsion is selected so that the said aqueous phase contains, by weight, from 100 to 5000 ppm of scleroglucan.

9. Emulsion according to any one of Claims 1 to 8, characterised in that the bituminous binder constituting the organic phase of the emulsion is a bitumen.

10. Emulsion according to any one of Claims 1 to 8, characterised in that the bituminous binder constituting the organic phase of the emulsion is a composition of the bitumen/polymer type.

11. Emulsion according to any one of Claims 1 to 8, characterised in that the bituminous binder constituting the organic phase of the emulsion is a bitumen/polymer composition in the case of which the polymer is a copolymer of styrene and a conjugated diene.

12. Emulsion according to Claim 11, characterised in that the copolymer of styrene and a conjugated diene is selected from the block copolymers styrene/butadiene, styrene/isoprene, styrene/chloroprene, styrene/carboxylated butadiene and styrene/carboxylated isoprene.

13. Emulsion according to any one of Claims 1 to 12, characterised in that the organic phase formed from the bituminous binder represents from 30 to 90 % by weight of the emulsion.

14. Emulsion according to any one of Claims 1 to 13, characterised in that the emulsifying system present in the aqueous phase of the emulsion is formed from one or more cationic emulsifying agents.

15. Emulsion according to any one of Claims 1 to 13, characterised in that the emulsifying system present in the aqueous phase of the emulsion is formed from one or more anionic emulsifying agents.

16. Emulsion according to any one of Claims 1 to 13, characterised in that the emulsifying system present in the aqueous phase of the emulsion is formed from one or more non-ionic emulsifying agents.

17. Emulsion according to any one of Claims 1 to 13, characterised in that the emulsifying system present in the aqueous phase of the emulsion comprises one or more amphoteric emulsifying agents.

18. Emulsion according to any one of Claims 1 to 17, characterised in that it contains from 0.03 % to 3 % by weight of emulsifying system.

19. Use of the emulsion according to any one of Claims 1 to 18 for applications in road engineering, sealing in civil engineering or in building or also for other industrial applications.

## Patentansprüche

1. Emulsion eines bituminösen Bindemittels, gebildet aus einer Dispersion einer aus dem bituminösen Bindemittel bestehenden organischen Phase in einer wäßrigen Phase, die ein aus einem oder mehreren Emulgatoren bestehendes Emulgatorsystem, ein wasserlösliches Verdickungsmittel und gegebenenfalls ein Mittel zur Einstellung des pH's der Emulsion enthält, dadurch **gekennzeichnet,** daß das Verdickungsmittel aus 40 bis 100 Gew.-% eines Skleroglucans besteht und 60 bis 0 % eines oder mehrerer wasserlöslicher Verdickungsmittel ausgewählt sind unter den Naturgummis wie Guargummi, Carobin, Alginat und Pektin.

2. Emulsion nach Anspruch 1, dadurch **gekennzeichnet,** daß das Verdickungsmittel ausschließlich aus Skleroglucan besteht.

3. Emulsion nach Anspruch 1 oder 2, dadurch **gekennzeichnet,** daß das verwendete Skleroglucan ein von seinem Herstellungsmedium abgetrenntes und gegebenenfalls gereinigtes Skleroglucan ist.

4. Emulsion nach Anspruch 1 oder 2, dadurch **gekennzeichnet,** daß das verwendete Skleroglucan aus dem flüssigen Reaktionsmedium besteht, das von seiner Herstellung herrührt und das Skleroglucan gegebenenfalls nach Abtrennung der im Medium enthaltenen Feststoffe und gegebenenfalls nach dessen Konzentrierung in Lösung enthält.

5. Emulsion nach Anspruch 1 oder 2, dadurch **gekennzeichnet,** daß das verwendete Skleroglucan ein modifiziertes Skleroglucan ist, erhalten durch Ersatz der Hydroxylgruppen der D-Glucose-Einheiten des Skleroglucans durch funktionelle Gruppen, ausgewählt unter den Gruppen -OR, -OOCR, -OCH₂COOH, -OSO₃H, -ONO₂, -OCS₂H, -OOCNHC₆H₅, wobei R einen C₁-C₆-Alkylrest bedeutet.

6. Emulsion nach Anspruch 1 oder 2, dadurch **gekennzeichnet,** daß das verwendete Skleroglucan ein durch Behandlung mit einem Dialdehyd modifiziertes Skleroglucan ist.

7. Emulsion nach Anspruch 6, dadurch **gekennzeichnet,** daß der Dialdehyd Glyoxal ist.

8. Emulsion nach einem der Ansprüche 1 bis 7, dadurch **gekennzeichnet,** daß die Menge an Verdickungsmittel in der wäßrigen Phase der Emulsion so ausgewählt wird, daß die wäßrige Phase, bezogen auf das Gewicht, 100 bis 5000 ppm Skleroglucan enthält.

9. Emulsion nach einem der Ansprüche 1 bis 8, dadurch **gekennzeichnet,** daß das die organische Phase der Emulsion bildende bituminöse Bindemittel aus einem Bitumen besteht.

10. Emulsion nach einem der Ansprüche 1 bis 8, dadurch **gekennzeichnet,** daß das die organische Phase der Emulsion bildende bituminöse Bindemittel aus einer Zusammensetzung vom Bitumen-Polymer-Typ besteht.

11. Emulsion nach einem der Ansprüche 1 bis 8, dadurch **gekennzeichnet**, daß das die organische Phase der Emulsion bildende bituminöse Bindemittel aus einer Bitumen-Polymer-Zusammensetzung besteht, bei der das Polymer ein Copolymer aus Styrol und einem konjugierten Dien ist.

12. Emulsion nach Anspruch 11, dadurch **gekennzeichnet,** daß das Copolymer aus Styrol und einem konjugierten Dien ausgewählt wird unter Blockcopolymeren aus Styrol und Butadien, Styrol und Isopren, Styrol und Chloropren, Styrol und carboxyliertem Butadien sowie Styrol und carboxyliertem Isopren.

13. Emulsion nach einem der Ansprüche 1 bis 12, dadurch **gekennzeichnet,** daß die aus dem bituminösen Bindemittel gebildete organische Phase 30 bis 90 Gew.-% der Emulsion ausmacht.

14. Emulsion nach einem der Ansprüche 1 bis 13, dadurch **gekennzeichnet,** daß das Emulgatorsystem in der wäßrigen Phase der Emulsion aus einem oder mehreren kationischen Emulgatoren gebildet ist.

15. Emulsion nach einem der Ansprüche 1 bis 13, dadurch **gekennzeichnet,** daß das Emulgatorsystem in der wäßrigen Phase der Emulsion aus einem oder mehreren anionischen Emulgatoren gebildet ist.

16. Emulsion nach einem der Ansprüche 1 bis 13, dadurch **gekennzeichnet,** daß das Emulgatorsystem in der wäßrigen Phase der Emulsion aus einem oder mehreren nichtionischen Emulgatoren gebildet ist.

17. Emulsion nach einem der Ansprüche 1 bis 13, dadurch **gekennzeichnet,** daß das Emulgatorsystem in der wäßrigen Phase der Emulsion aus einem oder mehreren amphoteren Emulgatoren besteht.

18. Emulsion nach einem der Ansprüche 1 bis 17, dadurch **gekennzeichnet,** daß sie 0,03 bis 3 Gew.-% des Emulgatorsystems enthält.

19. Verwendung der Emulsion nach einem der Ansprüche 1 bis 18 für den Straßenbau, für Dichtungsschürzen im Tief- oder Hochbau sowie für andere technische Zwecke.
